# EUROPÄISCHE PATENTSCHRIFT

(11) **EP 3 143 606 B1**
(45) Veröffentlichungstag und Bekanntmachung des Hinweises auf die Patenterteilung: **11.03.2020**
(21) Anmeldenummer: 15732519.2
(22) Anmeldetag: 12.05.2015
(51) Int. Cl.: G08G 1/0962, G08G 1/16, G01S 13/93, G08G 1/0967

(54) **SYSTEM ZUR FAHRERUNTERSTÜTZUNG**
SYSTEM FOR DRIVER SUPPORT
SYSTÈME D'ASSISTANCE À LA CONDUITE

(30) Priorität: 15.05.2014 DE 102014106890
(43) Veröffentlichungstag der Anmeldung: 22.03.2017
(73) Patentinhaber: Deutsches Zentrum für Luft- und Raumfahrt e.V., 51147 Köln (DE)
(72) Erfinder: KLARNER, Robert, 80331 München (DE); RUNGE, Hartmut, 81377 München (DE)
(74) Vertreter: Rösler, Frank
(86) Internationale Anmeldenummer: PCT/DE2015/100194
(87) Internationale Veröffentlichungsnummer: WO 2015/172770

(56) Entgegenhaltungen:
- WO-A1-2013/113421
- DE-A1- 10 017 321
- DE-A1- 19 756 706
- US-B1- 6 577 266

## Beschreibung

Die Erfindung betrifft ein System und ein Verfahren zur Unterstützung eines Fahrers beim Betrieb eines Fahrzeugs in einem Straßenverkehrsnetz. Weiterhin betrifft die Erfindung ein Fahrerassistenzsystem zur Unterstützung eines Fahrers beim Betrieb eines Fahrzeugs in einem Straßenverkehrsnetz sowie ein Fahrzeug mit einem ebensolchen Fahrerassistenzsystem.

Die Verkehrsregelung und Verkehrssteuerung in einem Straßenverkehrsnetz erfolgt heute durch statische Verkehrsschilder und Lichtsignalanlagen (bspw. Ampeln). Weiter entwickelt sind sogenannte "Wechselzeichen", die dynamische Informationen wiedergeben können. Verkehrszeichen oder Wechselzeichen müssen jedoch von dem Fahrer eines Fahrzeugs optisch wahrgenommen und bewusst verarbeitet werden, bevor der Fahrer die vom Zeichen potentiell veranlasste Verkehrsregelung bzw. Verkehrssteuerung auch umzusetzen kann. Manchmal sind die Fahrer jedoch abgelenkt oder mit der Führung des Fahrzeugs derart überlastet, dass sie die Verkehrs- oder Wechselzeichen nicht wahrnehmen oder nicht bewusst verarbeiten. Dadurch kann es zu erheblichen Verkehrsgefährdungen kommen. So können Kreuzungen bei roter Ampel überfahren werden und in Extremfällen kann es zu sogenannten "Geisterfahrern" auf Autobahnen kommen, die eine erhebliche Verkehrsgefährdung bedeuten, weil Verkehrszeichen übersehen wurden. Weiterhin kommt es leider auch häufig zu Auffahrunfällen auf liegen gebliebene Fahrzeuge, da diese vom Fahrer nicht rechtzeitig oder richtig erkannt wurden.

Aus der DE 100 173 21 A1 ist ein Kraftfahrer-Informationssystem bekannt, bei dem im Fahrzeug eine Anzeige darüber vorgesehen ist, dass ein Verkehrszeichen mit einer Information, die Angebot zu Begrenzung der Höchstgeschwindigkeit enthält, gerade passiert wurde. Dabei kann das Verkehrszeichen mit einer sensorisch erfassbaren Kennung über die aktuelle Beschränkung ausgestattet sein, die im Hochfrequenz- oder Infrarot-Spektrum abgestrahlt wird. Das Verkehrszeichen kann weiterhin aktiv mit einem Codesender oder passiv mit einem Kennungsgeber oder mit einer definierten Anzahl von Reflektoren ausgestattet sein. Das Fahrzeug verfügt entsprechend über einen abtasteten bzw. bildverarbeitenden Sensor für die Anzahl der Reflektoren oder für das Muster des Verkehrszeichens.

Aus der WO 2013/113421 A1 ist ein Signalgeber zur Hervorhebung von Objekten im Straßenverkehr bekannt. Die US 6 577 266 B1 offenbart einen Radar Transponder.

Der Erfindung liegt die Aufgabe zugrunde, ein System und ein Verfahren zur Unterstützung eines Fahrers beim Betrieb eines Fahrzeugs in einem Straßenverkehrsnetz anzugeben, das die vorstehend angesprochenen Verkehrsgefährdungen zumindest reduziert.

Die Erfindung ergibt sich aus den Merkmalen der unabhängigen Ansprüche. Vorteilhafte Weiterbildungen und Ausgestaltungen sind Gegenstand der abhängigen Ansprüche.

Die Aufgabe ist mit einem System zur Unterstützung eines Fahrers beim Betrieb eines Fahrzeugs in einem Straßenverkehrsnetz gelöst. Das vorgeschlagene System umfasst zumindest ein in dem Straßenverkehrsnetz vorhandenes Objekt, das mit einem eine Information kodierenden "Radar-Schild" oder englisch "Radar-Tag" ausgestattet ist, einen im Fahrzeug angeordneten Radarsensor zur Abtastung einer Fahrzeugumgebung und zur Erfassung der durch den Radar-Tag kodierten Information, ein im Fahrzeug angeordnetes Auswertemittel zur Auswertung der vom Radarsensor erfassten Information des Radar-Tags, und ein im Fahrzeug angeordnetes Ausgabemittel zur Ausgabe (insbesondere "zur optischen oder akustischen Ausgabe) der ausgewerteten Information oder eines auf der ausgewerteten Information basierenden Signals oder einer auf der ausgewerteten Information basierenden weiterverarbeiteten Information. Das vorgeschlagene System zeichnet dadurch aus, dass der Radar-Tag dazu eingerichtet und ausgeführt ist, eine zeitlich veränderbare Radarsignatur zu erzeugen, die dazu dient, zeitvariabel verschiedene Informationen zu kodieren, und der Radar-Tag hierzu matrixartig angeordnete Radar-Reflektoren aufweist, die einzelnen mit einer ansteuerbaren mechanisch beweglichen Blende aus einem Radarstrahlen absorbierenden Material bedeckt werden können, wobei durch Bewegen der Blende das Muster aus Radarstrahlen reflektierender und absorbierender Pixel zeitabhängig verändert wird.

Der Begriff "Objekt" ist vorliegend weit gefasst. Er kann grundsätzlich jedes Objekt umfassen, das für den Verkehr auf dem Straßenverkehrsnetz für den Verkehr, insbesondere zum Betrieb eines Fahrzeugs, relevant sein kann. Darunter fallen insbesondere beispielsweise Lichtsignalanlagen, Verkehrszeichen, Anzeigetafeln, Straßenschilder, Leitplanken, Leitpfosten, Fahrbahnbegrenzungen, Verkehrsteilnehmer (bspw. Radfahrer, Schüler, blinde Personen, Kinderwagen, Schulranzen, Taschen und Behältnissen, Kleidungsstücken, Rollstühlen, Rollatoren, Gehilfen, LKWs, Busse, landwirtschaftliche Maschinen, etc.), eine Verkehrsinfrastruktur, ein einzelnes Warndreieck, ein Hindernis, ein Sensor, z. B. zur Erkennung von Bodenfrost. etc.

Der Begriff "Radar-Tag" beschreibt vorliegend eine Vorrichtung, bei dem eine auf das Radar-Tag auftreffende bzw. das Radar-Tag scannende Radarstrahlung passiv reflektiert und zeitvariabel kodiert wird. Die Kodierung kann durch die aktuelle Radarsignatur des Radar-Tags definiert sein.

Der Radar-Tag ist daher gemäß einer Weiterbildung insbesondere als passive Vorrichtung ausgeführt, wobei an dem Radar-Tag vom Radarsensor eintreffende Radarstrahlung mit der aktuellen Radarsignatur des Radar-Tags reflektiert wird, und die Radarsignatur die Information kodiert.

Vorteilhaft definiert die durch den Radar-Tag kodierte Information die Art des Objekts und/oder eine Beschreibung des Objekts und/oder einen Zustand des Objekts und/oder eine Position des Objekts und/oder Verkehrsinformationen und/oder ein Gebot oder Verbot. Grundsätzlich kann durch den Radar-Tag eine beliebige Information (insbesondere Text, Zahlen, Graphiken, etc.) kodiert werden.
In einer vorteilhaften Weiterbildung kodiert der Radar-Tag eine Information (bspw. eine Internet-Adresse), die es erlaubt, sich über bspw. ein im Fahrzeug verfügbares mobiles Internet aktuelle Informationen, die in Verbindung mit dem Objekt stehen herunterzuladen. Dieses Herunterladen erfolgt vorteilhaft automatisch ggf. unter Einbindung eines Zentralsystems des Fahrzeugs, das Navigation, Kommunikation und Entertainment verbindet. So ist es möglich, die in dem Radar-Tag kodierte Information zu reduzieren, was die notwendige Größe der Radar-Tags reduziert, wobei nahezu beliebige Möglichkeiten bestehen, Informationen zu einem Objekt oder letztlich zu dem Radar-Tag selbst im Fahrzeug zur Verfügung zustellen.

Die vom Radar-Tag kodierte Information, muss letztlich nichts über das Objekt aussagen, an dem der Radar-Tag angeordnet ist, vielmehr kann er nach Erfordernis jede beliebige Information kodieren.

Die vom Radar-Tag eines Objekts definierte Information kann somit zeitunabhängig sein, bspw. beschreibt sie, dass es sich bei dem Objekt um ein Gebotsschild, das eine Maximalgeschwindigkeit von 50 km/h vorschreibt, oder ein Ortsschild, das automatisch eine innerörtliche Geschwindigkeit vorgibt, oder einen Leitpfosten oder eine Leitbarke für die rechte bzw. die linke Seite handelt. Sie gibt mithin bspw. die Art des Objekts an. Vorzugsweise sind alle identischen Objekte mit einer identischen Kodierung versehen, d.h. bspw. alle Leitpfosten für den rechten Straßenrand in Fahrrichtung weisen eine identische Kodierung auf. Neben der für identische Objekte identischen Kodierung, kann die Kodierung jedes der identischen Objekte natürlich auch individuell kodierte Informationen, wie bspw. die Position oder. eine individualisierte Identität (ID-Nummer) des jeweiligen Objekts aufweisen. Besondere Unterstützung bei der Positionierung leisten derartige Radar-Tags insbesondere bei Nacht oder schlechter Sicht, oder in Straßentunnels und Unterführungen oder baulichen Strukturen (Parkhäusern), in denen Satellitennavigation selbst für grobe Ortsangaben nicht verfügbar ist.

Gemäß der Erfindung weist der Radar-Tag eine Matrix von Corner-Reflektoren auf. Ein solcher Radar-Tag arbeitet somit als passiver Radar-Tag, der einfallende Radarstrahlung abhängig von der Matrixanordnung der Reflektoren kodiert reflektiert. Bei Einsatz eines Radarsensors im Frequenzbereich von bspw. 77 bis 79 GHz- kann ein Matrixelement bspw. eine Fläche von 1 bis 10 cm² insbesondere 3 bis 6 cm² aufweisen. Damit ist ein sicheres Erkennen der in der Matrix kodierten Information aus einer Entfernung zwischen 100 - 200 m durch eine Radarabtastung möglich ist, sind die Matrixflächen und ggfs. Zwischenräume ausreichend zu wählen. Die Kodierung durch die Matrix kann bspw. in Form eines QR-Codes (engl. Für Quick-Response Code) oder eines Sema-Codes oder eines Bar-Codes erfolgen. Die Matrix von Corner-Reflektoren kann sehr preiswert z. B. durch dreidimensional geprägte Metallfolie oder durch eine auf ein Kunststoff-Substrat aufgedampfte Metallschicht hergestellt werden.

Die Kodierung in einer solchen Matrix erfolgt durch entsprechende Anordnung von Reflektoren (Corner-Reflektoren oder Retro-Reflektoren) und durch nicht reflektierende Flächen in der Matrix. Letztere können durch Abdeckung mit Mikrowellen-reflektierenden oder absorbierenden Material realisiert werden. Zur Realisierung der unterschiedlich kodierter Radar-Tags brauchen daher nur die Mikrowellen-Blendenmasken ausgetauscht bzw. speziell angefertigt werden.

Vorteilhaft kann die Kodierung der Matrix zeitabhängig verändert werden, so dass zeitabhängige Informationen kodiert werden können. Im einfachsten Fall besteht die Matrix in einem solchen Fall aus homogen matrixartig angeordneten Radar-Reflektoren, bspw. mit einer Pixelfläche von 1 bis 10 cm², die einzelnen mit einer ansteuerbaren mechanischen Blende, aus einem Radarstrahlen absorbierenden oder reflektierenden Material, bedeckt werden können. Durch Bewegen oder Austauschen der Blende kann das Muster aus Radarstrahlen reflektierenden und absorbierenden Pixeln zeitabhängig verändert werden.

Die von dem Radar-Tag definierte Information ist vorteilhaft zumindest teilweise zeitabhängig, bspw. beschreibt sie einen aktuellen zeitabhängigen Schaltzustand einer Ampel und/oder die verbleibende Zeit bis die Ampel auf Grün oder auf Rot schaltet. Daneben umfasst die Kodierung vorteilhaft immer einen zeitunabhängigen Kodierungsteil, der das Objekt selbst identifiziert, vorliegend bspw. eine Ampel.

Vorteilhaft ist die vom Radar-Tag kodierte Information zumindest teilweise redundant, um eine sichere Übermittlung auch bei Verschmutzung oder teilweiser Beschädigung des Radar-Tags zu gewährleisten. Weiterhin umfasst die vom Radar-Tag kodierte Information vorteilhaft einen Prüfcode, mittels dem die Übermittlung der vollständigen Information an das Fahrzeug vom Auswertemittel geprüft werden kann.

Vorteilhaft ist der Radarsensor (Sender und Empfänger) ein in dem Fahrzeug bereits für andere Zwecke oder Assistenzsysteme verbauter Radarsensor, bspw. für eine Radargesteuerte Längsregelung und/oder Querregelung des Fahrzeugs, oder für eine Radarbasierte Abtastung einer Umgebung des Fahrzeugs. Somit sind fahrzeugseitig bereits vorhandene Radarsysteme nutzbar, was Kosten verringert und eine Realisierbarkeit des vorgeschlagenen Systems verbessert. Vorzugsweise ermöglicht der Radarsensor eine 3D-Abtastung der zumindest Fahrzeug voraus liegenden Umgebung. Der Radarsensor arbeitet vorzugsweise im GHz-Bereich und hat eine Auflösung von wenigen mm² in 100 - 200 m Entfernung.

Das im Fahrzeug erfasste, vom Radar-Tag stammende kodierte Radarsignal wird von dem Auswertemittel im Fahrzeug ausgewertet. Dabei sind dem Auswertemittel die entsprechenden Kodierungen zur Kennzeichnung der einzelnen Objekte, und ggf. die zugehörigen Kodierungen möglicher zeitabhängiger Informationen zum Objekt vorteilhaft bekannt, bspw. aus einer Datenbank oder einer Look-Up Tabelle. So ist bspw. ein statisches Verkehrsschild einerseits durch einen Code definiert der angibt, dass es sich um ein statisches Verkehrsschild handelt, und andererseits durch eine Nummer definiert, die angibt, um welches Verkehrsschild es sich handelt.

Alternativ oder zusätzlich kann im Auswertemittel eine Dekodierung der vom Radarsensor erfassten Signale erfolgen, so dass es möglich ist, nahezu beliebige Informationen an das Fahrzeug mittels des Radar-Tags zu übermitteln und dort weiter zu verarbeiten, bereitzustellen oder auszugeben.

Das Auswertemittel und der Radarsensor sind vorteilhaft dazu ausgeführt, bei der Erfassung der durch das Radar-Tag kodierten Information und bei der Auswertung der erfassten kodierten Information die Frequenz, Phase und Polarisation einer vom Radar-Tag empfangenen Strahlung zu berücksichtigen. Dadurch kann einen höhere Informationsdichte kodiert und übermittelt werden. Weiterhin kann die Erkennung des Radar-Tags als solches mit diesen Kodiermöglichkeiten verbessert werden.

Das Ausgabemittel dient, wie bereits ausgeführt, zur Ausgabe der ausgewerteten Information oder eines auf der ausgewerteten Information basierenden Signals oder einer auf der ausgewerteten Information basierenden weiterverarbeiteten Information. Das Ausgabesystem ist vorteilhaft derart ausgeführt, dass im Fall, dass die ausgewertete oder weiterverarbeitete Information einer dem Ausgabesystem bekannten kritischen Situation entspricht, eine akustische und/oder eine optische Warnung an den Fahrer ausgegeben wird oder Steuersignale an ein Fahrzeugsystem ausgegeben werden. Text-Informationen wie Straßen- oder Hinweisschilder werden bspw. in einem Display im Fahrzeug angezeigt oder vorgelesen.

Weiterverarbeitete Informationen, die auf der vom Radarsensor erfassten Informationen basieren, sind vorliegend beispielsweise Informationen, die vom erfindungsgemäßen Radarsystem erfasst, vom Auswertesystem ausgewertet werden, und anschließend mit aktuellen Informationen aus der Fahrzeug-Sensorik, einem Navigationssystem oder einem anderen System des Fahrzeugs kombiniert, fusioniert und gemeinsam ausgewertet werden. Dies sei durch folgendes Beispiel veranschaulicht.

Ein Fahrer fährt in Richtung auf einen Autobahnzubringer zu. Fahrzeug voraus liegt auch die Einmündung der lokalen Autobahnabfahrt, die der Fahrer nicht nehmen darf, um nicht in falscher Fahrtrichtung auf die Autobahn aufzufahren und damit zum Geisterfahrer zu werden. Die Einfahrt in falscher Richtung auf die lokale Autobahnausfahrt ist durch ein entsprechendes Verbotszeichen gekennzeichnet. Dieses Verbotszeichen umfasst einen erfindungsgemäßen passiven Radar-Tag. Auf dem Weg in Richtung Autobahnzubringer wird dieser Radar-Tag von dem Radarsensor des Fahrzeugs erfasst und abgetastet. Wird nun vom Navigationssystem des Fahrzeugs insbesondere prädiktiv erkannt, dass das Fahrzeug die Autobahnausfahrt statt den Autobahnzubringer befahren wird, wird der Fahrer durch eine akustische und optische Ausgabe gewarnt. Vorzugsweise wird das Fahrzeug in diesem Fall automatisch gebremst, gestoppt und die Warnblinkanlage aktiviert.

Das hier vorgeschlagene System ermöglicht eine von den Wetter-, Licht- und Sichtverhältnissen unabhängige Erkennung von Objekten bzw. von deren zeitabhängigen Zuständen oder von den Objekten übermittelten Informationen. Insbesondere lassen sich bspw. Verkehrsteilnehmer (Sonder-Fahrzeuge, LKW, Radfahrer, Schüler, etc.), die mit einem entsprechenden Radar-Tag ausgestattet sind, bei Nacht und/oder Nebel rechtzeitig als solche erkennen, so dass die Gefahr von Auffahrunfällen oder gefährlichen Begegnungen durch Ausgabe einer rechtzeitigen Warnung erheblich reduziert werden kann. Die passiven Radar-Tags sind einfach und kostengünstig herstellbar, robust und langlebig und weisen dabei eine Größe von vorzugsweise 20 - 2500 cm², insbesondere von 25 cm², 50 cm², 100 cm², 250 cm², 500 cm², 1.000 cm² 1.500 cm², oder 2.000 cm² auf.

Das vorgeschlagene System ermöglicht es somit, mittels heute für Fahrzeuge verfügbarer Radartechnik, die für den Betrieb des Fahrzeugs auf dem Straßenverkehrsnetz relevanten Objekte, Infrastrukturen, allen voran Lichtsignalanlagen, weitere Wechselverkehrszeichen und dauerhafte Verkehrszeichen ebenso wie auch die weiteren Verkehrsteilnehmer und Hindernisse in die Lageerfassung auch in ihrem jeweiligen Zustand zu identifizieren. Weiterhin können durch den Radar-Tag beliebige Informationen an das Fahrzeug übermittelt werden. Die Radar-Technik kann auf diese Weise im Fahrzeug nicht mehr nur Sub-Sensorik sein, sondern zu einer oberen Informationsebene mit hoher Eigenständigkeit, Robustheit, Verbindlichkeit und Vollständigkeit für das Fahrzeug werden. Das vorgeschlagene System ermöglicht weiterhin insbesondere die Fusionierung der beschriebenen Radardaten mit anderen im Fahrzeug verfügbaren Daten, für deren gemeinsame Auswertung, Analyse, Ausgabe und/oder der Bereitstellung sich daraus ergebender Anweisungen und/oder Warnungen. Weiterhin liefert das vorgeschlagene System einen Beitrag zur Weiterentwicklung von Assistenzfunktionen, die den Grad der Automatisierung beim Fahren in Richtung eines vollwertigen Autopiloten steigern, d.h. ein autonomes Fahren ermöglichen.

Für den Fahrer bzw. die Passagiere eines Fahrzeugs kann der Kontext, der mit der Umgebung mittels des vorgeschlagenen Systems hergestellt wird, zusätzlich zur Sicherheit auch den Komfort steigern, sowie das flüssigere, auf die aktuelle Verkehrssituation hin optimierte Vorankommen ermöglichen. Verschiedene im Fahrzeug vorhandene Sensoren können sich zudem vorteilhaft ergänzen bzw. als Redundanz dienen und das Wahrnehmungsvermögen des Fahrers durch eine komplementäre automatische Mehrfach-Wahrnehmung seitens des Fahrzeugs absichern.

Die Art der Kodierung der Informationen durch den Radar-Tag ist vorteilhaft über einen verbindlichen Standard (bspw. durch eine entsprechende Norm), insbesondere gesetzlich einheitlich zu regeln.

Ein weiterer Aspekt der Erfindung betrifft ein Verfahren zur Unterstützung eines Fahrers beim Betrieb eines Fahrzeugs in einem Straßenverkehrsnetz, bei dem zumindest ein in dem Straßenverkehrsnetz vorhandenes Objekt mit einem eine Information kodierenden Radar-Tag ausgestattet ist, wobei der Radar-Tag dazu eingerichtet und ausgeführt ist, eine zeitlich veränderbare Radarsignatur zu erzeugen, die dazu dient, zeitvariabel verschiedene Informationen zu kodieren, und der Radar-Tag matrixartig angeordnete Radar-Reflektoren aufweist, die einzelnen mit einer ansteuerbaren mechanisch beweglichen Blende aus einem Radarstrahlen absorbierenden Material bedeckt werden können, wobei durch Bewegen der Blende das Muster aus Radarstrahlen reflektierender und absorbierender Pixel zeitabhängig verändert wird, ein im Fahrzeug angeordneter Radarsensor eine Fahrzeugumgebung abtastet und die durch den Radar-Tag kodierte Information erfasst, ein im Fahrzeug angeordnetes Auswertemittel die vom Radarsensor erfasste Information des Radar-Tags auswertet, und ein im Fahrzeug angeordnetes Ausgabemittel, das die ausgewertete Information oder ein auf der ausgewerteten Information basierendes Signal oder eine auf der ausgewerteten Information basierende weiterverarbeitete Information ausgibt.

Bevorzugte Weiterbildungen und Vorteile des vorgeschlagenen Verfahrens ergeben sich durch eine sinngemäße und analoge Übertragung der zu dem vorgeschlagenen System gemachten Ausführungen.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:
- Fig. 1: eine schematisierte Darstellung des vorgeschlagenen Systems in einer Ausgestaltung, und
- Fig.2: ein schematisierter Verfahrensablauf des vorgeschlagenen Verfahrens in einer Ausgestaltung.

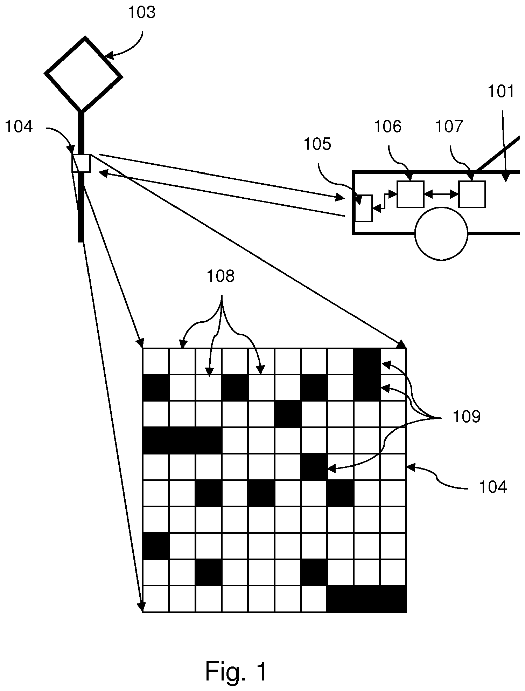

**Fig. 1** zeigt eine schematisierte Darstellung des vorgeschlagenen Systems zur Unterstützung eines Fahrers beim Betrieb eines Fahrzeugs 101 in einem Straßenverkehrsnetz in einer Ausgestaltung.
Das System umfasst eine Vielzahl von in dem Straßenverkehrsnetz vorhandenen Objekten, von denen in Fig. 1 exemplarisch ein Objekt 103 (ein Verkehrsschild) dargestellt ist. Das Verkehrsschild 103 ist mit einem eine Information kodierenden passiven Radar-Tag 104 ausgestattet. Der Radar-Tag 104 kodiert die Information dass es sich erstens um ein Verkehrsschild handelt und zweitens, um welches Verkehrsschild es sich handelt.

Das System umfasst weiterhin einen im Fahrzeug 101 angeordneten Radarsensor 105 zur Abtastung einer Fahrzeugumgebung und zur Erfassung der durch den Radar-Tag 104 kodierten Information. Der Radarsensor 105 arbeitet bevorzugt mit einer Frequenz im Bereich von 5 - 90 GHz. Er umfasst einen Radarsender und einen Radarempfänger, die zur 3D-Abtastung der Umgebung, insbesondere der voraus liegenden Umgebung des Fahrzeugs 101 ausgeführt sind.

Im Fahrzeug 101 ist weiterhin ein Auswertemittel 106 zur Auswertung der vom Radarsensor 105 erfassten Informationen des Radar-Tags 104 angeordnet. Vorliegend wird vom Auswertemittel 106 auf Basis der vom Radarempfänger empfangenen Radarsignale erkannt, um welches Verkehrszeichen 103 es sich handelt. Die empfangenen Radarsignale werden hierzu vom Auswertemittel 106 decodiert. Weiterhin ermöglicht die Auswertung der empfangenen Radarsignale die Ermittlung einer relativen Position des Radar-Tags 104 zum Fahrzeug 101, so dass auch diese zusätzlichen Informationen im Fahrzeug 101 für weitere Anwendungen bereitgestellt werden.

Das Radar-System kann auch bi-statisch arbeiten, also der Sender (Beleuchter) zu einer anderen Systemkomponente wie der Empfänger gehört. Es kann vorteilhaft sein, bspw. ein Anti-Kollisions Radar, das ohnehin die voraus liegende Fahrzeugumgebung abtastet, auch als Beleuchter für die Schilder zu nutzen. Da für das Auslesen der Radar-Tags eine hohe räumliche Bildauflösung gefordert ist, die das Anti-Collision Radar ggf. nicht liefern kann, ist eine spezielle Mikrowellen-Kamera notwendig, um das (beleuchtete) Radar-Tag auszulesen.

Schließlich ist im Fahrzeug 101 ein Ausgabemittel 107 zur Ausgabe der durch das Auswertemittel 106 ausgewerteten Information oder eines auf der ausgewerteten Information basierenden Signals oder einer auf der ausgewerteten Information basierenden weiterverarbeiteten Information angeordnet.

In Fig.1 ist schließlich in vergrößerter Form die schematisierte Ausgestaltung des Radar-Tags 104 dargestellt. Der passive Radar-Tag 104 umfasst in einer 10 x 10 Matrix angeordnete Corner-Reflektoren 108. Jeder Reflektor (Pixel) belegt eine Fläche von 3 cm². Insgesamt weist die Matrix somit eine quadratische Fläche mit einer Kantenlänge von rund 30 cm auf. Auf der Matrixanordnung der Corner-Reflektoren 108 ist eine Blende 109 aus einem Radarstrahlung absorbierenden Material angeordnet, welche einzelne der Corner-Reflektoren 108 vollständig bedeckt (vorliegend die schwarzen Quardate/ Pixel), so dass sich insgesamt ein Muster ergibt, das die Codierung der das Verkehrsschild kennzeichnenden Information ermöglicht. Das Muster wird schließlich vom Radarsensor 105 abgetastet.

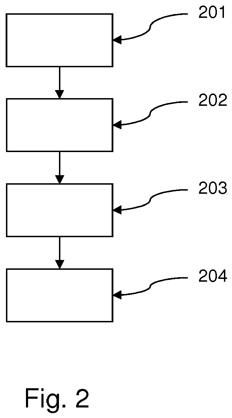

**Fig.2** zeigt einen schematisierten Verfahrensablauf des vorgeschlagenen Verfahrens zur Unterstützung eines Fahrers beim Betrieb eines Fahrzeugs 101 in einem Straßenverkehrsnetz, wobei in dem Straßenverkehrsnetz zumindest ein Objekt 103 mit einem eine Information kodierenden Radar-Tag 104 ausgestattet ist. In einem ersten Schritt 201 wird von einem im Fahrzeug 101 angeordneten Radarsensor 105 eine Fahrzeugumgebung abtastet und die durch den Radar-Tag 104 kodierte Information erfasst. In einem zweiten Schritt 202 wird durch ein im Fahrzeug 101 angeordnetes Auswertemittel 105 die vom Radarsensor 105 erfasste Information des Radar-Tags 104 auswertet. Hierzu wird das vom Radarsensor 105 empfangene Signal decodiert. Nach diesem Schritt 202 ist bekannt, um welches Verkehrsschild es sich vorliegend handelt. In einem dritten Schritt 203 wird diese ausgewertete Information vom Auswertemittel 106 mit dem Ergebnis eines weiteren im Fahrzeug angeordneten Fahrerassistenzsystems, nämlich einem optischen Verkehrszeichenerkennungssystem, verglichen. Wird das Kennzeichen von beiden Systemen gleichermaßen eindeutig erkannt, wird die ausgewertete Information im vierten Schritt 204 an ein im Fahrzeug 101 angeordnetes Ausgabemittel 107 übermittelt, das die ausgewertete Information oder ein auf der ausgewerteten Information basierendes Signal oder eine auf der ausgewerteten Information basierende weiterverarbeitete Information ausgibt.

### Bezugszeichenliste

- 101: Fahrzeug
- 103: Objekt
- 104: Radar-Tag
- 105: Radarsensor
- 106: Auswertemittel
- 107: Ausgabemittel
- 108: Corner-Reflektoren oder Retro-Reflektoren
- 109: Blende aus Radarstrahlung absorbierendem Material

- 201-204: Verfahrensschritte

## Patentansprüche

1. System zur Unterstützung eines Fahrers beim Betrieb eines Fahrzeugs (101) in einem Straßenverkehrsnetz, mit
- zumindest einem in dem Straßenverkehrsnetz vorhandenen Objekt (103), das mit einem eine Information kodierenden Radar-Tag (104) ausgestattet ist, einem im Fahrzeug (101) angeordneten Radarsensor (105) zur Abtastung einer Fahrzeugumgebung und zur Erfassung der durch den Radar-Tag (104) kodierten Information,
- einem im Fahrzeug (101) angeordneten Auswertemittel (106) zur Auswertung der vom Radarsensor (105) erfassten Information des Radar-Tags (104), und
- einem im Fahrzeug (101) angeordneten Ausgabemittel (107) zur Ausgabe der ausgewerteten Information oder eines auf der ausgewerteten Information basierenden Signals oder einer auf der ausgewerteten Information basierenden weiterverarbeiteten Information,
**dadurch gekennzeichnet, dass** der Radar-Tag (104) dazu eingerichtet und ausgeführt ist, eine zeitlich veränderbare Radarsignatur zu erzeugen, die dazu dient, zeitvariabel verschiedene Informationen zu kodieren, und der Radar-Tag (104) matrixartig angeordnete Radar-Reflektoren aufweist, die einzeln mit einer ansteuerbaren mechanisch beweglichen Blende aus einem Radarstrahlen absorbierenden Material bedeckt werden können, wobei durch Bewegen der Blende das Muster aus Radarstrahlen reflektierender und absorbierender Pixel zeitabhängig verändert wird.

2. System nach Anspruch 1,
**dadurch gekennzeichnet, dass** der Radar-Tag (104) als passive Vorrichtung ausgeführt ist und an dem Radar-Tag (104) vom Radarsensor (105) eintreffende Radarstrahlung reflektiert wird, wobei die aktuelle Radarsignatur des Radar-Tags (104) die Information kodiert.

3. System nach einem der Ansprüche 1 oder 2,
**dadurch gekennzeichnet, dass** der Radar-Tag (104) eine Matrix von Cornerreflektoren aufweist.

4. System nach einem der Ansprüche 1 bis 3,
**dadurch gekennzeichnet, dass** das Objekt (103) eine Lichtsignalanlage oder ein Verkehrszeichen oder eine Anzeigetafel oder eine Fahrbahnbegrenzung oder ein Leitpfosten oder eine Leitbarke oder ein Verkehrsteilnehmer oder eine Verkehrsinfrastruktur oder ein Warndreieck oder ein Hindernis ist.

5. System nach einem der Ansprüche 1 bis 4,
**dadurch gekennzeichnet, dass** die vom Radar-Tag (104) kodierte Information die Art des Objekts (103) und/oder eine Beschreibung des Objekts (103) und/oder einen Zustand des Objekts (103) und/oder eine Position des Objekts (103) und/oder Verkehrsinformationen und/oder ein Gebot oder Verbot definiert.

6. System nach einem der Ansprüche 1 bis 5,
**dadurch gekennzeichnet, dass** das Auswertemittel (106) und der Radarsensor (105) dazu ausgeführt sind, bei der Erfassung der kodierten Information und bei der Auswertung der kodierten Information die Frequenz, Phase und Polarisation einer vom Radar-Tag (104) empfangenen Strahlung zu berücksichtigen.

7. Verfahren zur Unterstützung eines Fahrers beim Betrieb eines Fahrzeugs (101) in einem Straßenverkehrsnetz, bei dem
- zumindest ein in dem Straßenverkehrsnetz vorhandenes Objekt (103) mit einem eine Information kodierenden Radar-Tag (104) ausgestattet ist, wobei der Radar-Tag (104) dazu eingerichtet und ausgeführt ist, eine zeitlich veränderbare Radarsignatur zu erzeugen, die dazu dient, zeitvariabel verschiedene Informationen zu kodieren, und der Radar-Tag (104) matrixartig angeordnete Radar-Reflektoren aufweist, die einzeln mit einer ansteuerbaren mechanisch beweglichen Blende aus einem Radarstrahlen absorbierenden Material bedeckt werden können, wobei durch Bewegen der Blende das Muster aus Radarstrahlen reflektierender und absorbierender Pixel zeitabhängig verändert wird,
- ein im Fahrzeug (101) angeordneter Radarsensor (105) eine Fahrzeugumgebung abtastet und die durch den Radar-Tag (104) kodierte Information erfasst,
- ein im Fahrzeug (101) angeordnetes Auswertemittel (105) die vom Radarsensor (105) erfasste Information des Radar-Tags (104) auswertet, und
ein im Fahrzeug (101) angeordnetes Ausgabemittel (107), das die ausgewertete Information oder ein auf der ausgewerteten Information basierendes Signal oder eine auf der ausgewerteten Information basierende weiterverarbeitete Information ausgibt.

## Claims

1. System for driver support when operating a vehicle (101) in a road transport network, having
- at least one object (103) present in the road transport network, which object (103) is equipped with a radar tag (104) encoding a piece of information, a radar sensor (105) arranged in the vehicle (101) for scanning a vehicle environment and for detecting the piece of information encoded by the radar tag (104),
- an evaluation means (106) arranged in the vehicle (101) for evaluating the piece of information of the radar tag (104) detected by the radar sensor (105), and
- a display means (107) arranged in the vehicle (101) for displaying the evaluated piece of information or a signal based on the evaluated piece of information or a piece of information which has been further processed based on the evaluated piece of information,
**characterized in that** the radar tag (104) is set up and designed to produce a radar signature which is variable with time and is intended to encode different pieces of information which vary with time, and the radar tag (104) has radar reflectors arranged in a matrix-like manner, which can be covered individually with a controllable, mechanically movable panel made of a material which absorbs radar beams, wherein the pattern of radar beams of reflecting and absorbing pixels is changed as a function of time by moving the panel.

2. System according to Claim 1,
**characterized in that** the radar tag (104) is designed as a passive device and incident radar radiation from the radar sensor (105) is reflected on the radar tag (104), wherein the current radar signature of the radar tag (104) encodes the piece of information.

3. System according to one of Claims 1 or 2,
**characterized in that** the radar tag (104) has a matrix of corner reflectors.

4. System according to one of Claims 1 to 3,
**characterized in that** the object (103) is a traffic light or a road sign or a destination board or a road boundary or a reflector post or a safety beacon or a road user or traffic infrastructure or a warning triangle or an obstacle.

5. System according to one of Claims 1 to 4,
**characterized in that** the piece of information encoded by the radar tag (104) defines the type of object (103) and/or a description of the object (103) and/or a state of the object (103) and/or a position of the object (103) and/or traffic information and/or a requirement or restriction

6. System according to one of Claims 1 to 5,
**characterized in that** the evaluation means (106) and the radar sensor (105) are designed to take into account the frequency, phase and polarization of radiation received by the radar tag (104) when detecting the encoded piece of information and when evaluating the encoded piece of information.

7. Method for driver support when operating a vehicle (101) in a road transport network, wherein
- at least one object (103) present in the road transport network is equipped with a radar tag (104) encoding a piece of information, wherein the radar tag (104) is set up and designed to produce a radar signature which is variable with time and is intended to encode different pieces of information which vary with time, and the radar tag (104) has radar reflectors arranged in a matrix-like manner, which can be covered individually with a controllable, mechanically movable panel made of a material which absorbs radar beams, wherein the pattern of radar beams of reflecting and absorbing pixels is changed as a function of time by moving the panel,
- a radar sensor (105) arranged in the vehicle (101) scans a vehicle environment and detects the piece of information encoded by the radar tag (104),
- an evaluation means (106) arranged in the vehicle (101) evaluates the piece of information of the radar tag (104) detected by the radar sensor (105), and
a display means (107) arranged in the vehicle (101) which displays the evaluated piece of information or a signal based on the evaluated piece of information or a piece of information which has been further processed based on the evaluated piece of information.

## Revendications

1. Système d'assistance à la conduite lors de l'utilisation d'un véhicule (101) dans un réseau de circulation routière avec
- au moins un objet (103) présent dans le réseau de circulation routière est doté d'un panneau radar (104) codant une information, un capteur radar (105) disposé dans le véhicule (101) destiné à balayer un environnement de véhicule et à la saisie de l'information codée par le panneau radar (104),
- un moyen d'évaluation (106) disposé dans le véhicule (101) destiné à évaluer l'information du panneau radar (104) saisie par le capteur radar (105), et
- un moyen d'émission (107) disposé dans le véhicule (101) destiné à émettre l'information évaluée ou un signal se basant sur l'information évaluée ou une information traitée se basant sur l'information évaluée ,
**caractérisé en ce que** le panneau radar (104) est agencée et exécutée pour produire une signature radar modifiable dans le temps, qui sert à coder différentes informations variant dans le temps et le panneau radar (104) comporte des réflecteurs radar disposés comme une matrice, qui peuvent être couverts individuellement avec un obturateur fait d'un matériau absorbant le faisceau radar, mécaniquement mobile pouvant être commandé, sachant que par le mouvement de l'obturateur, le modèle est modifié en fonction du temps à partir de pixels réfléchissant et absorbant le faisceau radar.

2. Système selon la revendication 1,
**caractérisé en ce que** le panneau radar (104) est exécuté comme un dispositif passif et un faisceau radar arrivant du capteur radar (105) est réfléchi sur le panneau radar (104), sachant que la signature radar actuelle du panneau radar (104) code l'information.

3. Système selon l'une quelconque des revendications 1 ou 2,
**caractérisé en ce que** le panneau radar (104) comporte une matrice de réflecteurs dièdres.

4. Système selon l'une quelconque des revendications 1 à 3,
**caractérisé en ce que** l'objet (103) est une installation de signalisation lumineuse ou un panneau de signalisation ou un tableau d'affichage ou une délimitation de chaussée ou un délinéateur ou une balise de guidage ou un usager de la route ou une infrastructure de circulation ou un triangle de signalisation.

5. Système selon l'une quelconque des revendications 1 à 4,
**caractérisé en ce que** l'information codée par le panneau radar (104) définit le type de l'objet (103) et/ou une description de l'objet (103) et/ou un état de l'objet (103) et/ou une position de l'objet (103) et/ou des informations de circulation et/ou un commandement ou une interdiction.

6. Système selon l'une quelconque des revendications 1 à 5,
**caractérisé en ce que** le moyen d'évaluation (106) et le capteur radar (105) sont exécutés pour prendre en compte la fréquence, la phase et la polarisation d'un faisceau reçu par le panneau radar (104) lors de la saisie de l'information codée et lors de l'évaluation de l'information codée.

7. Procédé d'aide à la conduite lors de l'utilisation d'un véhicule (101) dans un réseau de circulation routière, pour lequel
- au moins un objet (103) présent dans le réseau de circulation routière est doté d'un panneau radar (104) codant une information, sachant que le panneau radar (104) est agencée et exécutée pour produire une signature radar modifiable dans le temps, qui sert à coder différentes informations variant dans le temps et le panneau radar (104) comporte des réflecteurs radar disposés comme une matrice, qui peuvent être couverts individuellement avec un obturateur fait d'un matériau absorbant le faisceau radar, mécaniquement mobile pouvant être commandé, sachant que par le mouvement de l'obturateur, le modèle est modifié en fonction du temps à partir de pixels réfléchissant et absorbant le faisceau radar,
- un capteur radar (105) disposé dans le véhicule (101) balaie un environnement de véhicule et saisit l'information codée par le panneau radar (104),
- un moyen d'évaluation (106) disposé dans le véhicule (101) évalue l'information du panneau radar (104) saisie par le capteur radar (105), et
un moyen d'émission (107) disposé dans le véhicule (101) qui émet l'information évaluée ou un signal se basant sur l'information évaluée ou une information traitée se basant sur l'information évaluée.
